# EUROPEAN PATENT APPLICATION

(11) **EP 2 181 968 A1**
(43) Date of publication of application: **05.05.2010**
(21) Application number: 08018828.7
(22) Date of filing: 28.10.2008
(51) Int. Cl.: C02F 11/18

(54) **Method and apparatus for pressurizing and heat-treating a flowable suspension**

(71) Applicant: Demetrion Rechte GmbH, 6330 Cham (CH)
(72) Inventor: Hügle, Thomas, Prof. Dr., 24118 Kiel (DE); Weigel, Ralf, 67240 Bobenheim (DE)

(57) **Abstract**

A method of heat-treating a flowable suspension, the method comprising the steps of pressurising the suspension; heat-treating the pressurised suspension; and depressurising the heat-treated suspension by means of a fixed flow rate pump (4). The fixed flow rate pump (4) is controlled to keep the pressured suspension essentially within a pre-determined pressure range. The step of pressurising the suspension can be performed by a pressurising pump and the energy generated by the depressurising pump (4) is used to drive the pressurising pump (2).

## Description

### Background of the invention

The invention relates to a method of heat-treating a flowable suspension, preferably a suspension comprising biogenic material or other organic material, the method comprising the steps of pressurising the suspension; heat-treating the pressurised suspension; and depressurising the heat-treated suspension by means of a fixed flow rate pump. Moreover the invention relates to a device for subjecting a flowable suspension, preferably a suspension comprising biogenic material, to a temperature hydrolysis, the device comprising means for pressurising the suspension, means for heat-treating the pressurised suspension and a fixed flow rate pump for depressurising the suspension.

### State of the art

There are many occasions in which a heat-treatment of a suspension is desirable. In particular, this concerns the processing of suspensions of biogenic or other organic material. These suspensions can for example be sterilised by means of heat-treating them. Also, heat treatment can be an important step in processes that convert organic or biogenic material into other useful products such as ethanol or biogas. In particular, exposing the organic or biogenic material to elevated temperatures can induce hydrolysis of complex macromolecules.

For example, methane-containing biogas can be generated by anaerobic microbial digestion of biogenic material in a fermentation vessel. In multiple steps, the microorganisms break down the complex macromolecules of the biogenic material, thereby generating biogas comprising methane, carbon dioxide, water and other gaseous molecules. Subsequently, the biogas is cleaned and then converted into electrical and thermal energy in a combustion engine.

In general, of the many steps performed by the microorganisms in the fermentation vessel, the hydrolysis step is the slowest and therefore determines the overall speed of anaerobic microbial degradation. In order to provide for faster hydrolysis, it has been suggested to subject the biogenic material to a temperature hydrolysis step before introducing it into the fermentation vessel. It has been found that in particular the hydrolysis of cellulose and hemi-cellulose can be greatly expedited by the application of high temperatures.

The heat treatment can be performed by exposing the flowable suspension to an elevated temperature which may be above 100°C. In order to prevent the liquid fraction of the suspension from vaporizing, at temperatures at or above 100°C the suspension must be pressurised. Once the heat treatment step is completed, the suspension can be cooled down again and it can be depressurised.

For depressurising the suspension, it has been suggested to use a valve or a cascade of valves. It has also been suggested to spring-charge such valves so that the opening of the aperture is proportional to the pressure of the suspension in order to regulate this pressure. Alternatively, electronically controlled valve have been proposed for this purpose.

It can be a disadvantage of the depressurising valves that they tend to clog. It is assumed that this is partly due to the very irregular distribution of particle sizes which is typical for a suspension of biogenic material and partly due to the fact that the aperture of the valve must be kept relatively small because the suspension's compressibility is very low so that even small amounts of suspension passing through the valve can lead to a disproportioned drop in pressure. In fact, it can prove very difficult indeed to keep by means of valves the suspension within the desired pressure range. Rather, sudden pressure drops may occur, entailing undesirable steam hammering. It has also been observed that the valves can quickly abrade, probably due to the solid fraction of the suspension and the high speed with which the suspension passes through the valve.

The German Patent application DE 26 45 150 discloses a method of treating slurries in which the slurries are heated, pressurised and brought to a boil. The boiled slurry is then concentrated in a filter and fed into an incinerator. In order to limit the delivery rate into the incinerator, it is suggested to employ a dosing pump such as an eccentric rotary pump or a peristaltic pump.

### Problem to be solved by the invention

It is an object of the present invention to provide an improved method of heat-treating a flowable suspension, which method overcomes drawbacks encountered in the prior art. It is a further objective of the present invention to provide an improved device for heat-treating a flowable suspension, which device overcomes drawbacks of the known devices.

### Solution according to the invention

According to the invention, the problem is solved by providing a method of heat-treating a flowable suspension, the method comprising the steps of pressurising the suspension; heat-treating the pressurised suspension; and depressurising the heat-treated suspension by means of a fixed flow rate pump, wherein the fixed flow rate pump is controlled to keep the pressured suspension essentially within a pre-determined pressure range.

Also, the problem is solved by providing a device for heat-treating a flowable suspension, the device comprising means for pressurising the suspension, means for heat-treating the pressurised suspension and a fixed flow rate pump for depressurising the suspension, wherein the device comprises control means for controlling the depressurising pump such that the pressure of the pressurised suspension is kept within a pre-determined pressure range.

Advantageously, in the fixed flow rate pump according to the invention, the volumetric flow rate is essentially independent of the pressure of the suspension before and/or after the pump. In other words, it essentially lacks the volume-pressure-elasticity observed in common kinetic pumps such as eductor-jet pumps. Examples for fixed flow rate pumps are progressive cavity pumps, gear pumps, including internal and external gear pumps and gearotors, vane pumps, piston pumps, lobe pumps, and peristaltic pumps.

It is an achievable advantage of the invention that the pressure of the suspension can be kept within a pre-determined range. In particular, the pressure can be kept high enough to avoid vaporisation of a liquid component of the suspension. Moreover, it is achievable to keep the pressure low enough to ensure the safety of the device and avoid a waste of energy.

It is another achievable advantage of the invention, that clogging can be avoided. Finally, abrasion as observed in the valves of the prior art devices can be avoided, thereby reducing maintenance costs.

Advantageously, the invention can be applied for sterilising biogenic material or for subjecting the flowable suspension to a temperature hydrolysis, for example in order to pretreat biogenic or other organic material in the production of fuels such as ethanol or biogas.

### Description of preferred embodiments of the invention

Preferred features of the invention which may be applied alone or in combination are disclosed in the dependent claims. Reference numerals in the claims are not meant to limit the scope of the claims to specific embodiments of the invention but merely serve to facilitate reading of the claim by means of reference to such exemplary embodiments.

Preferably, the flowable suspension is an aqueous suspension. Particularly preferred is a suspension of organic material, more preferably biogenic material. Preferably, at least the solid component of the suspension comprises or consists of biogenic or other organic material. The biogenic material preferably is reduced to small pieces, e.g. in a mill or a macerator and mixed with water or, more preferably, with recyclate coming from a fermenter, or with a liquid component of the recylcyte obtained by means of a separation device. The biogenic material may be renewable raw material, preferably renewable vegetable raw material such as corn, sugar-beet, sugar-cane, straw or wood. It may also be a biogenic residue such as organic industrial or agricultural waste, sewage sludge, slaughter waste, kitchen slops, food leftovers and adulterated food stuff. The invention can be employed particularly advantageously with biogenic material comprising cellulose and/or hemi-cellulose and/or lignin. A fraction of biogenic material in the suspension preferably is between 2 and 30 %, more preferably between 4 and 20 %, more preferably between 8 and 15 %, more preferably between 10 and 13 % in terms of dry mass of biogenic material.

When the suspension is depressurised by means of the depressurising pump, it sets the pump in motion, preferably rotation. Preferably, the pressure of the suspension is controlled by means of controlling the rate of motion, preferably the rate of rotation, of the depressurising pump.

The preferred device according to the invention is provided with a pressure sensor to measure the pressure of the pressurised suspension. Preferably, the rate of motion is controlled in relation to the pressure of the suspension as measured by the pressure sensor. The skilled person will be aware of appropriate methods of controlling the pump's motion, e.g. the use of breaks. In a particularly preferred embodiment of the invention, the rate of motion is controlled by controlling an electrical generator which generator is driven by the motion of the depressurising pump. The generator may e.g. be controlled by adjusting a load applied to the generator. Thus, by means of the generator, the flow through the depressurising pump can be controlled such that deviations from the desired pressure can be compensated for so that in particular undesired pressure drops can be avoided.

The lower limit of the preferred pressure range is above 5 bar, more preferably above 10 bar, more preferably above 20 bar, e.g. 25 bar. In one embodiment of the invention, the lower limit of the pressure range may be above 30 bar. With such pressures, vaporisation can be avoided even at relatively high temperatures. The upper limit of the pressure range preferably is below 100 bar, more preferably below 70 bar, more preferably below 50 bar, more preferably below 40 bar, more preferably below 35 bar. The pressure range preferably has a width of 40 bar or less, more preferably 30 bar or less, more preferably 20 bar or less, more preferably 15 bar or less. In a preferred embodiment of the invention, the suspension enters the pressurising pump at approximately atmospheric pressure. The suspension preferably leaves the depressurising pump at a pressure still above atmospheric pressure so that the remaining overpressure can be used to further transport the suspension, e.g. to a fermentation vessel. In one embodiment of the invention, the suspension leaves the depressurising pump at a pressure of approximately 2 bar.

The preferred depressurising pump provides for a steady delivery flow. In other words, the pump provides for a delivery flow that is essentially constant over the course of a full pump cycle. Pumps that can achieve a steady delivery flow include progressive cavity pumps and vane pumps. Advantageously, according to this embodiment of the invention, oscillations in the pressure can be avoided, which oscillations may otherwise lead to undesirable pressure drops and steam hammering.

The preferred depressurising pump is a progressive cavity pump, also sometimes referred to as an eccentric screw pump. It is an achievable advantage of this embodiment of the invention, that a very steady delivery flow can be achieved. Moreover, advantageously, a low friction between the suspension and the pump can be achieved reducing the wear of the pump. Also, advantageously, the progressive cavity pump can be employed at relatively high pressures. Preferably, in the progressive cavity pump, the suspension is transferred by means of a progress, through the pump, of a sequence of fixed shape, discrete cavities as a rotor of the pump is turned. Preferably, the volumetric flow rate is proportional to the rate of rotation of the rotor. The rotor preferably is of stainless steel while the stator preferably is of a moulded elastomer.

In a preferred embodiment of the invention, pressurising of the suspension is performed by a pressurising pump. Preferably, the pressurising pump is a fixed flow rate pump, more preferably a fixed flow rate pump that provides for a steady delivery flow. A particularly preferred pressurising pump is a progressive cavity pump, also referred to as an eccentric screw pump. As in the case of the depressurising pump, with this embodiment of the invention oscillations can be avoided, which may otherwise lead to undesirable pressure drops and steam hammering. The wear of the pump is relatively low due to the low friction between the suspension and the pump. Moreover, advantageously, the progressive cavity pump can be employed at relatively high pressures.

When set into motion by the suspension, the depressurising pump generates mechanical energy. This energy can be harvested, e.g. by means of an electrical generator. In one preferred embodiment of the invention, the energy generated by the depressurising pump contributes to drive the pressurising pump. In other words, at least part of the energy consumed by the pressurising pump can be recovered by means of the depressurising pump. This may e.g. be achieved by supplying at least part of the energy generated by an electrical generator driven by the depressurising pump to an electrical motor driving the pressurising pump. Alternatively, energy may be transferred mechanically from the depressurising pump to the pressurising pump, e.g. by means of a belt and/or a rotary shaft and/or a gearing. In general, the energy generated by the depressurising pump will not be sufficient to drive the pressurising pump. Therefore, preferably the pressurising pump is, at least in addition to the energy from the depressurising pump, supplied with energy from another source.

If an electrical generator is used to convert the mechanical energy generated by the de-pressurising pump into electricity, this electricity may also be at least partly be fed into an external electricity network, such as a local or regional electricity grid.

The method according to the invention preferably is carried out as a continuous process. In a preferred embodiment of the device according to the invention, the pressurising pump and the depressurising pump are connected by a conduit system through which the pressurised suspension is passed to be heat-treated. The conduit system preferably comprises a reactor to perform the heat treatment, e.g. a hydrolysis reactor to subject the suspension to a temperature hydrolysis. Moreover, the conduit system preferably comprises means for heating up the suspension after it has been pressurised and means for cooling the suspension down again before it is depressurised. In a particularly preferred embodiment of the invention, the heating and cooling means are coupled for heat recovery, so that at least part of the heat absorbed in the cooling means can be used in the heating means for heating up the suspension.

Advantageously, the suspension can continuously be passed through the conduit system. Preferably, the process can be performed in a mode in which essentially the same amount of suspension enters the conduit system through the pressurising pump as suspension leaves the conduit system through the depressurising pump.

In the method according to the invention, the step of heat-treating the suspension comprises subjecting the suspension to a heat-treatment temperature of above 100°C, more preferably above 140°C, more preferably above 180°C, more preferably above 220°C, more preferably above 240°C. The suspension preferably is maintained at this temperature for a pre-determined time, preferably in the hydrolysis reactor. Preferably, the suspension is maintained at the treatment temperature long enough to guarantee the statutory hydraulic retention time for the sterilisation of biogenic material e.g. according to the pertinent European Community hygiene directive.

After subjecting the invention to the hydrolysis temperature, the temperature preferably is lowered again to a temperature below 100°C, more preferably below 80°C, e.g. 70°C. Preferably, the step of lowering the temperature takes place before the step of de-pressurising the heat-treated suspension by means of the fixed flow rate pump.

### Brief description of the drawings

The invention is illustrated in greater detail with the aid of schematic drawings:
- Fig. 1: shows a simplified process flow diagram of a method and device according to the invention; and
- Fig. 2: shows a simplified process flow diagram of the conduit system of Fig. 1.

### Detailed description of embodiments of the invention

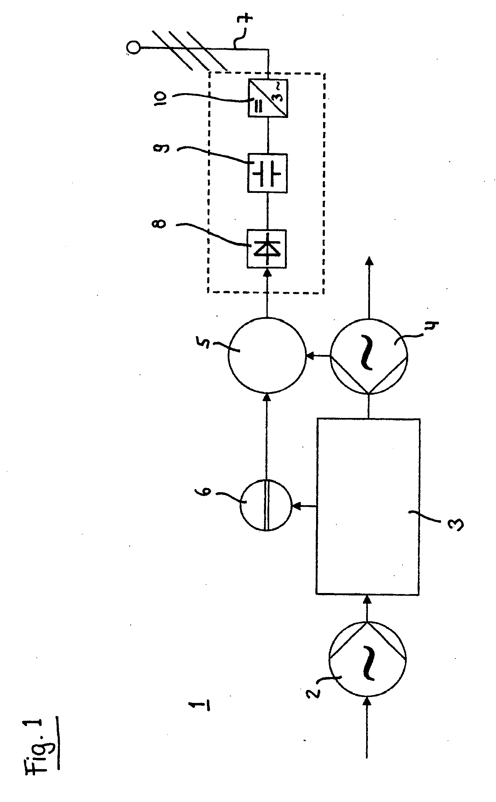

An embodiment of the device 1 according to the invention is illustrated in Fig. 1 by means of a simplified process flow diagram. Biogenic material has been reduced to small pieces in a mill or in a macerator (not shown) and has then been suspended in water or the liquid component of an aqueous recirculate coming from a fermenter (not shown) to form a suspension comprising about 10 to 15 % biogenic material (with respect to the dry mass of the biogenic material). The liquid component has been obtained by separating it from the remainder by means of a separation device (not shown).

The suspension, which originally is at atmospheric pressure, is pressurised by a progressive cavity pump 2 to a pressure within the interval from 25 to 40 bar. The compressed suspension is then introduced into the conduit system where it is subjected to a heat treatment. The treated, still pressurised suspension is then depressurised in another progressive cavity pump 4 to a pressure of 2 bar. This residual overpressure is used to further transport the suspension to the fermernter.

The progressive cavity pumps each comprise a helical rotor with a circular cross-section, which performs an eccentric rotary motion in a stator with an oval cross-section. The rotor is of stainless steel while the stator is of a moulded elastomer. As the rotor turns, suspension is transferred by means of the progress, through the pump, of a sequence of fixed shape, discrete cavities. The volumetric flow rate is directly proportional to the rate of rotation.

The flow rate of the depressurising progressive cavity pump 4 is controlled to keep the pressured suspension within the narrow interval from 25 to 40 bar. Thereby, the pressure is kept high enough to avoid vaporisation and at the same time does not exceed the maximum pressure at which the device can operate safely according to its construction. For this purpose, the depressurising pump 4 drives an electrical generator 5. By means of the generator 5, the flow through the depressurising pump 4 can be controlled to compensate for deviations from the desired pressure. To achieve this, the load of the generator 5 is adjusted as a function of the pressure of the suspension as measured by a pressure sensor 6 which measures the pressure of the pressurised suspension in the hydrolysis reactor 3. When the load of the generator 5 is increased, the generator 5 and thus the depressurising pump 4 are slowed down, thereby reducing the pump's 4 flow rate and thus increasing the pressure of the pressurised suspension in the conduit system 3. This way, in particular undesired pressure drops can be avoided.

The electricity generated by the electrical generator 5 in one embodiment of the invention is introduced into an external electricity network 7 after being rectified in a rectifier 8, filtered in a filter 9, and converted by a converter 10 into the required direct or alternating, e.g. three-phase, voltage.

In an alternative embodiment of the invention, all or at least part of the electricity generated by the generator 5 is, preferably also after rectification, filtering and conversion, used to drive a motor (not shown), which motor then drives the pressurising pump 2.

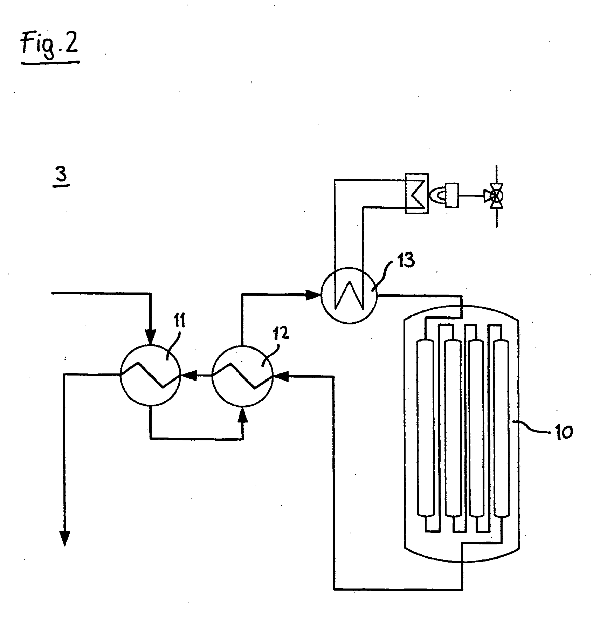

Fig. 2 illustrates by means of a simplified process flow diagram in greater detail the conduit system 3 through which the pressurised suspension is passed. The pressurised suspension coming from pressurising pump 2 has approximately room temperature. Before introduced into reactor section 10, it passes through two heat exchangers 11, 12 in which it takes up heat from suspension leaving the reactor section 10. The suspension is moreover led through another heat exchanger 13 which uses thermal oil heated by a heat source 14 or waste heat of a combustion engine (not shown) run on the biogas coming from the fermenter. As a result the suspension has a temperature of approximately 200°C when it enters the reactor section 10.

The volume of the reactor section is chosen to guarantee a statutory hydraulic retention time of at least 20 minutes. Leaving the reactor section 10, the suspension is cooled down again as it passes through the heat exchangers 12, 11 giving off much of its heat to the incoming suspension. The suspension leaves the hydrolysis reactor at a temperature of approximately 70°C.

The features described in the above description, claims and Figures can be relevant to the invention in any combination.

## Claims

1. A method of heat-treating a flowable suspension, the method comprising the steps of pressurising the suspension; heat-treating the pressurised suspension; and depressurising the heat-treated suspension by means of a fixed flow rate pump (4),
**characterized in that**
the fixed flow rate pump (4) is controlled to keep the pressured suspension essentially within a pre-determined pressure range.

2. The method according to claims 1, **characterised in that**
the flowable suspension comprises biogenic material.

3. The method according to claims 1 or 2, **characterised in that**
the pressure of the suspension is controlled by means of controlling the rate of motion of the depressurising pump (4).

4. The method according to any one of the previous claims, **characterised in that**
the lower limit of the pressure range is above 5 bar.

5. The method according to any one of the previous claims, **characterized in that**
the depressurising pump (4) provides for a steady delivery flow.

6. The method according to any one of the previous claims, **characterised in that**
the depressurising pump (4) is a progressive cavity pump.

7. The method according to any one of the previous claims, **characterised in that**
the step of pressurising the suspension is performed by a pressurising pump (2).

8. The method according to claim 6, **characterised in that**
energy generated by the depressurising pump (4) is used to drive the pressurising pump (2).

9. The method according to any one of the previous claims, **characterized in that**
the method is carried out as a continuous process.

10. The method according to any one of the previous claims, **characterised in that**
the step of heat-treating the suspension comprises subjecting the suspension to a heat-treatment temperature of above 100°C.

11. The method according to any one of the previous claims, **characterised in that**
after subjecting the suspension to the heat-treatment temperature, the temperature is lowered again to a temperature below 100°C

12. The method according to claim 10, **characterised in that**
the step of lowering the temperature takes place before the step of depressurising the heat-treated suspension by means of the fixed flow rate pump (4).

13. A device (1) for heat-treating a flowable suspension, the device (1) comprising means for pressurising the suspension, an hydrolysis reactor (10) for heat-treating the pressurised suspension and a fixed flow rate pump (4) for depressurising the suspension, **characterized in that**
the device (1) comprises control means (5, 6) for controlling the depressurising pump (4) such that the pressure of the pressurised suspension is kept within a pre-determined pressure range.

14. The device according to claim 13, **characterized in that**
the means for pressurising the suspension is a pressurising pump (2) and the pressurising pump and the depressurising pump (4) are connected by a conduit system (3) through which the pressurised suspension is passed to be heat-treated.
